# EUROPEAN PATENT SPECIFICATION

(11) **EP 3 339 103 B1**
(45) Date of publication and mention of the grant of the patent: **17.07.2019**
(21) Application number: 16205990.1
(22) Date of filing: 21.12.2016
(51) Int. Cl.: B60R 9/10

(54) **BIKE RETAINING DEVICE**
FAHRRADHALTEVORRICHTUNG
DISPOSITIF DE MAINTIEN D'UNE BICYCLETTE

(43) Date of publication of application: 27.06.2018
(73) Proprietor: Mont Blanc Industri AB, 516 90 Dalsjöfors (SE)
(72) Inventor: Hallenbert, Lennart, 447 93 VÅRGÅRDA (SE)
(74) Representative: AWA Sweden AB

(56) References cited:
- WO-A1-2004/005075
- WO-A1-2008/153380
- WO-A1-2011/136702
- JP-A- 2011 225 061
- US-A- 572 770
- US-A- 5 509 776

## Description

### Technical field of the Invention

The present invention relates to a bike retaining device and a bike carrier comprising such a bike retaining device.

### Background of the Invention

Bike carriers are often mounted on a vehicle in order to hold a bike in an upright position during transportation. Such bike carriers are used to facilitate the transportation of bikes from one location to another. Different types of bike carriers are available and they may be mounted on/at different parts on the vehicle, e.g. on the roof of the vehicle or at the rear end of the vehicle. There are types of bike carrier that require that the front wheel of the bike is dismounted before loading the bike to the bike carrier, but there are also bike carriers which do not require that.

The bike carriers which are suitable for mounting on the roof of a vehicle may often comprise an elongated base member which extends in the travel direction of the car and a bike retaining device attached to the elongated base member. The bike retaining device often comprises a hook or a claw which is used to hold and/or secure a frame portion of a bike during transportation. When in use, the wheels of the bike are placed on the elongated base section. US5,509,776 discloses a bike carrier comprising a load holder with a holder rod with gripping elements on both ends. As such US5,509,776 discloses a bike retaining device for retaining a bike in a bike carrier arrangement on a vehicle, said bike retaining device comprising: an arm; a first portion and a second portion projecting laterally away from said arm; wherein said first portion and said second portion are arranged at a distance from each other; a hook connected to said first portion; wherein said hook is arrangeable at least in a first configuration and a second configuration; wherein said hook is movable from said first configuration to said second configuration; wherein in said second configuration the distance between said first and second portion is at least partially covered; and whereby a space is defined by said first portion and said second portion for securing said frame portion of said bike.

A problem with bike carriers of today is that the loading and securing of the bike in the bike carrier may be difficult. When loading and securing a bike to such a bike carrier the person performing the act needs to stabilize the bike sufficiently and simultaneously regulate the hook or claw of the bike retaining device in order to secure it. For example, the hook or claw may often need to be opened before loading and closed afterwards in order to secure a frame portion of the bike inside said hook or claw. Often the loading and securing requires more than one person. Further, the loading and securing of a bike to such a bike carrier gets even more tricky if the person performing this act is not tall enough or does not have the required strength to stabilize the bike. Hence, there is a need to develop a new bike retaining device and a new bike carrier in order to improve the current state of the art. Such a bike retaining device and such a bike carrier is provided according to the present invention.

### Summary of the Invention

It is an object of the present invention to improve the current state of the art and to mitigate at least some of the above mentioned problems. These and other objects are achieved by a bike retaining device and a bike carrier, as defined in the accompanying independent claims 1 and 12 respectively.

According to a first aspect of the invention a bike retaining device for retaining a bike in a bike carrier arrangement on a vehicle is provided. The bike retaining device comprises:
- an elongated arm having a longitudinal extension;
- a first portion and a second portion projecting laterally away from said elongated arm;
- a hook connected to said first portion, said hook comprising a first shank and a second shank;
   wherein said hook is arrangeable at least in a first configuration and a second configuration;
   wherein in said first configuration said first shank is arranged such that a distance between said first portion and said second portion is at least partially covered by said first shank and such that it allows a user of said bike retaining device to press a frame portion of said bike against said first shank;
   wherein said hook is movable from said first configuration to said second configuration when said user of said bike retaining device presses a frame portion of said bike against said first shank; and
   wherein in said second configuration said second shank is arranged such that the distance between said first and second portion is at least partially covered by said second shank, whereby a space is defined by said first portion, said second portion and said second shank for securing said frame portion of said bike.

With this arrangement a bike can more easily be loaded in the bike carrier arrangement than what has been possible for the bike carriers earlier presented. The bike retaining device as provided by the invention comprises a "third hand"-function which facilitates the loading of the bike in the bike carrier since the person loading the bike may hold the bike with both his or her hands since there is no need for closing the bike retaining device with one of them. Hence, the bike retaining device according the invention does not require the same strength for balancing the bike with one hand. In other words, since the hook is arranged such that it is movable from the first configuration to the second configuration by pressing a frame portion of a bike towards the first shank there is no need for opening or closing the bike receiving device by hand.

It shall be understood that the longitudinal extension or direction of the elongated arm is the direction in which the elongated arm has its longest extension. Thus, the longest or main direction of the extension of the first and second portion is laterally relative to the longitudinal extension of the arm. It shall further be understood that by projecting laterally away from the elongated arm means that the longest extension of the first and second portion has a substantially different direction than the longest extension of the elongated arm. For example, according to at least one example embodiment of the invention the first and second portion may be projecting away from the elongated arm in a direction that is perpendicular to said longitudinal direction of the elongated arm. Moreover, it shall be understood that the distance between the first and the second portion is the distance between a distal end of the first portion and a distal end of the second portion. The distal end is referring to the end of the respective portion that is most far away from the elongated arm. Hence, a proximal end of the first or second portion is referring to the end which is arranged closest to the elongated arm.

According to at least one example embodiment of the invention the elongated arm may be made from a stiff material, such that the arm does not bend when loading the bike. Such a stiff material may for example be a metal, e.g. stainless steel or aluminum, or it can be a plastic material.

According to at least one example embodiment of the invention the first and second portion, as well as the hook may comprise a stiff material such as a metal, e.g. stainless steel or aluminum, or it can be a plastic material. The first and second portion and the hook may comprise the same material or they may comprise different materials.

According to at least one example embodiment of the invention the first shank comprises a bike receiving surface. In order to move the hook from the first configuration to the second configuration the user first places the frame portion of the bike adjacent to this bike receiving surface and then subsequently presses the bike against this surface such that the hook is moved from its first configuration to its second configuration. Hence, there is no need for the user to move the hook between the configuration by using one of his or her hands.

According to at least one example embodiment of the invention, the first portion may be arranged above the second portion when the longitudinal extension of the elongated arm is vertical or substantially vertical. According to at least another example embodiment of the invention the second portion may be arranged above the first portion when the longitudinal direction of the elongated arm is vertical or substantially vertical.

According to at least one example embodiment of the invention the first and/or the second portion of the bike retaining device may comprise a bike resting surface. This is the surface where a part of the frame portion of the bike which has been secured in the bike retaining device will rest on during transportation. The bike resting surface of the first and/or the second portion is a surface facing the other portion. This surface may comprise a soft material which may be the same or a different soft material as comprised by the bike receiving surface.

According to at least one example embodiment of the invention the material of the bike receiving surface is different from the rest of hook. For example, the bike receiving surface may comprise a soft material. The soft material may not destroy or make a mark in the frame portion of the bike which is placed adjacent and pressed against this surface. According to at least one example embodiment the bike receiving surface may be a bike resting surface. In other words, a bike which is loaded or secured in the bike retaining device may during transportation rest on the first shank.

According to at least one example embodiment of the invention the bike resting surface may be a non-planar surface. For example, it may be u-shaped or it may be v-shaped when looking at the bike retaining device across the main direction of the first and second portions. The non-planar shape of the bike resting surface hinders the bike to move away from the bike resting surface during transportation.

According to at least one example embodiment of the invention the first portion comprises a front side and back side. The front and back side of the first portion is spaced apart such that an empty space is defined in between. Hence, the first part may hollow. According to at least one example embodiment of the invention the hook is arranged between said front side and said back side of the first portion.

According to at least one example embodiment of the invention the first and the second shank may be of the same length. The length is such that the first shank at least partially covers the distance between the first and second portion in the first configuration and the second shank at least partially covers the distance between the first and the second portion in the second configuration. According to at least another embodiment of the invention the first and the second shank may be of different length. Also here the length is such that the first shank at least partially covers the distance between the first and second portion in the first configuration and the second shank at least partially covers the distance between the first and the second portion in the second configuration. For example, the first shank may be shorter than the second shank or vice versa.

According to at least one example embodiment of the present invention the first shank may cover at least 20 % of the distance between said first and second portion, or at least 40 % of the distance between said first and second portion, or at least 60 % of the distance between said first and second portion, or at least 80 % of the distance between said first and second portion, or it will fully cover the distance between said first and second portion when the hook is arranged in the first configuration.

According to at least one example embodiment of the present invention the second shank may cover at least 20 % of the distance between said first and second portion, or at least 40 % of the distance between said first and second portion, or at least 60 % of the distance between said first and second portion, or at least 80 % of the distance between said first and second portion, or it will fully cover the distance between said first and second portion when the hook is arranged in the second configuration.

According to at least one example embodiment of the invention the first shank may be longer than the distance of the first and the second portion. In such an embodiment the second portion may suitably be provided with a groove through which the first shank may move when the hook is moved from its first configuration to its second configuration.

According to at least one example embodiment of the invention the second shank may be longer than the distance between the first and the second portion.

According to the invention said first portion and said second portion are arranged at a distance from each other, wherein said first portion is movable relative the second portion in the direction of the longitudinal extension of the elongated arm.

According to at least one example embodiment of the invention the first portion may be movable relative to the elongated arm. In other words, the first portion may be mounted to the elongated arm in such manner that it can be move along the arm in its longitudinal direction.

According to at least one example embodiment of the invention the second portion may be fixedly mounted to the elongated arm and hence it cannot be moved along the elongated arm. Neither can it be move relative the first portion.

According to at least one example embodiment the first portion may comprise an opening at a proximal end arranged such that the elongated arm is provided inside this opening. The opening may be for example ring-formed or rectangular or it may be an irregular shape. The opening may be provided such that the first portion may slide along the elongated arm while moving relative the second portion. According to at least one example embodiment of the invention the elongated arm may have a cross-section which corrspojnds to the shape of the opening.

According to at least one example embodiment of the invention said first shank and said second shank are arranged at an angle, e.g. perpendicular, to each other. Having the first and second shank perpendicular to each other means that the space defined by the first and second portion and the second shank will be substantially rectangular formed when the hook is arranged in the second configuration without having the first shank extending into that space. It shall be understood that it is the main direction of the first and second portion and the second shank which gives the space its substantially rectangular space.

According to at least one example embodiment of the invention said hook is pivotably attached to said first portion such that said first and second shank pivot simultaneously around a pivot point. By having the hook pivotably attached to the first portion it is easy to move the hook from its first configuration to its second configuration by pressing the frame portion of the bike against the first shank of the hook.

According to at least one example embodiment of the invention the hook is pivotably attached to the first portion via connection means, which connection means being for example a pin which goes through connection holes in both the first portion and the hook. The connection holes of the first portion and the hook will be aligned such that the pin can go through these connection holes. According to at least one example embodiment of the invention the front and the back side of the first portion comprises a connection hole each which are being aligned with the connection hole of the hook such that the pin can go through the hole of both the front and back side of the first portion and the hook. Hence, the hook being pivotably attached to both the front and back side of the first portions.

Although the above described pivotable connection of the hook to the first portion is advantageous, other connections are conceivable. For instance, according to at least one example embodiment of the invention, first and the second shank may be parallel in a fork-like configuration and the hook may be connected to the first portion such that the hook can be pushed or dragged along a track or a groove in the first portion when moving from the first configuration to the second configuration such that the first shank at least partially covers the distance between the first and the second portion in the first configuration and such that the second shank at least partially covers the distance between the first and the second portion in the second configuration.

According to at least one example embodiment of the invention said hook is attached to said first portion at a distal end of said first portion. This facilitates the loading of the bike to the bike retaining device since this shortens the distance to be reached, i.e. the first shank will be closer to the person loading the bike to the bike retaining device.

According to at least one example embodiment of the invention wherein in said first configuration said first shank is substantially parallel to said longitudinal extension of said elongated arm and said second shank is substantially parallel to a projecting direction of said first and second portions; and wherein in said second configuration said first shank is substantially parallel to said projecting direction of said first and second portions and said second shank is substantially parallel to said longitudinal extension of said elongated arm. Hence, if the first and the second shank is arranged perpendicular to each other the hook may pivot 90 degrees between the first and the second configuration.

According to at least one example embodiment of the invention said hook is connected to said first portion via a spring and wherein said hook is under spring load in at least one of said first configuration or said second configuration. It shall be understood that under spring load means that the spring will apply a force on the hook, which force would cause a movement of the hook if the hook would not be physically hindered to move in the direction of the force.

According to at least one example embodiment of the invention the first portion comprises at least one stop or edge arranged for keeping the hook in the first or the second configuration while the spring strive towards its normal, non-compressed state. The spring "strives" towards its normal state, i.e. a state where the spring is at rest, and if the spring were allowed to extend to such a state the hook would pivot further. This movement is hindered by the at least one stop or edge.

According to at least one example embodiment the bike retaining device comprises two springs. The springs may be arranged such that one of the springs applies a force on the hook, and thus press the hook against a stop or an edge, i.e. keeping the hook under spring load, when in the first configuration, and the other one applies a force on the hook, and thus press the hook against a stop or an edge, i.e. keeping the hook under spring load, when in the second configuration.

According to at least one example embodiment of the invention said hook comprises a first and a second attachment point;
wherein said first attachment point is said pivot point and said spring is connected to said hook at said second attachment point; and wherein said first and said second attachment points are spaced apart on said hook.

According to at least one example embodiment of the invention the spring is attached to the hook by connection means, which connection means are attached in a point, e.g. a hole, in the hook which has a different location as compared to where the hook is pivotably attached to the first portion.

According to at least one example embodiment of the invention the spring is connected to a point on the hook where the first and the second shank meet.

According to at least one example embodiment of the invention said spring is compressed when pivoting said hook from said first configuration to said second configuration.

When the spring is in the first or the second configuration the spring may be less compressed as compared with any location between said first and second configuration. When moving the hook from the first to the second configuration or vice versa, the spring may be gradually compressed until a center point between the first and the second configuration is reached. After that center point is reached the spring will be extended gradually until either the first or second configuration is reached. The hook is not able to move from the first configuration towards the second configuration by itself since a force has to be applied to the first shank in order to compress the spring. Hence, the hook will stay in the first configuration and there is no need for a user loading a bike to the bike retaining device to hold the hook by hand while loading the bike. Moreover, the hook is not able to move from the second configuration towards the first configuration by itself since a force has to be applied to the second shank in order to compress the spring. The bike may therefore be secured in the bike retaining device during transportation. Applying a force to either the first or second shank in order to move the hook from the first configuration towards the second configuration or vice versa may be done by pressing a frame portion against the first or second shank.

According to at least one example embodiment of the invention the longitudinal extension of the spring will change direction while moving the hook from the first to the second configuration or vice versa. Viewing the spring along its longitudinal extension from the first portion towards the hook, the spring will point towards the elongated arm while the hook is in the first configuration. When the hook is in the second configuration the spring will point away from the elongated arm. As the spring is being most compressed the direction of the longitudinal extension of the spring will substantially be parallel to the elongated arm. In other words, the angle between the longitudinal extension of the spring and the main direction of the first portion will change when the hook moves from its first to its second configuration or vice versa.

According to at least one example embodiment of the invention said second shank of the hook substantially covers said full distance between said first portion and said second portion in said second configuration at least when said distance between said first portion and said second portion is equal to a minimal distance between said first portion and said second portion. The second shank will therefore hinder the frame portion of the bike to leave the space defined by the first and second portion and the second shank.

According to at least one example embodiment of the invention the distance between the first and the second portion may be defined by a track arranged on the elongated arm. For example, a part, e.g. a protruding part, of the first portion may move along or inside said track when the first portion moves relative the second portion. The minimal and maximal distance between the first and the second portion may then be defined by the length of the track since the part of the first portion is hindered to move a further distance than the distance of the track.

According to at least one example embodiment the distance between the first and the second portion may be defined by one or two stops arranged on the elongated arm. The first portion may move along the elongated arm and relative the second portion until a stop is reached.

According to at least one example embodiment of the invention the minimal distance between the first and the second portion may be defined by the width of the frame of the bike which has be secured in said bike retaining device. In such an embodiment the first portion can move towards the second portion until it or the hook reaches the frame of the bike. Hence, both the first portion or the hook and the second portion will be in contact with the frame of the bike. The minimal distance between the first and the second portion will therefore be different when bikes of different size, i.e. different frame dimensions, are loaded in the bike retaining device.

According to at least one example embodiment of the invention said elongated arm comprises a first and a second part, wherein said first part is movable in the longitudinal direction of said elongated arm relative said second part and wherein said first portion is arranged on said first part of the elongated arm and the second portion is arranged on said second part of the elongated arm.

According to at least one example embodiment of the invention the first portion may be fixedly connected to the first part of the elongated arm and does not move along the first part. The first portion will be moveable relative the second portion just by moving the first part relative the second part of the elongated arm.

According to at least one example embodiment of the invention one of the first or second parts of the elongated arm is telescopically movable relative the other.

According to at least one example embodiment of the invention the first part of the elongated part may be partly arranged inside the second part of the elongated arm. The first part may then move inside of the second part, i.e. the first part is telescopical moveable relative the second part. According to at least another embodiment of the invention the second part of the elongated arm may be partly arranged inside the first part. The first part may then move along the second part on the outside of the second part.

According to at least one example embodiment of the invention, said bike retaining device further comprises an elongated member arranged inside or along said elongated arm and wherein said elongated member is arranged for moving said first portion relative said second portion. The elongated member may facilitate the movement of the first portion relative the second portion since the person loading and securing the bike in the bike retaining device may not need to reach for the first portion in order to move this portion relative the second portion.

According to at least one example embodiment of the invention the elongated member may be a stiff member. For example, it may be a stick or a rod of e.g. metal or a plastic material. According to at least another example embodiment of the invention the elongated member may be a flexible member. For example, it may be a strand or a cord of e.g. textile or plastic. Further, such a flexible member may also be a metal chain or a flexible metal wire.

According to a second aspect of the invention a bike carrier is provided. The bike carrier comprises a bike retaining device and a base member wherein said bike retaining device is attached to said base member.

Effects and features of this second aspect of the present invention are largely analogous to those described above in connection with the first aspect of the inventive concept. Embodiments mentioned in relation to the first aspect of the present invention are largely compatible with the second aspect of the invention.

According to at least one example embodiment of the invention the base member is an elongated member which is mountable such that the longest extension of the base member is in the travel direction of the vehicle to which the bike carrier is mounted.

According to at least one example embodiment of the invention said base member comprises a first and a second wheel holder arranged separated from each other on said base member. The wheel holders may hinder the bike to move away from the base member during transportation and hence the wheel holders may further stabilize the bike in the bike carrier arrangement.

According to at least one example embodiment the wheel holder may hinder the bike to move in a direction which is transverse of the travel direction of the vehicle to which the bike carrier is mounted.

According to at least one example embodiment of the invention the bike retaining device may be connected to the base member in proximity to the wheel holder which during use should hold the front wheel of the bike loaded in the bike carrier. According to at least another embodiment of the invention the bike retaining device is connected to the base member in proximity to the wheel holder which during use should hold the back wheel of the bike. According to at least yet another embodiment of the invention the bike retaining device is connected to the base member between the wheel holders.

According to at least one example embodiment of the invention said elongated member comprises a first and a second end, wherein said first end is connected to said first portion of said bike retaining device and wherein said second end is connected to said base member. The base member will be the lowest point of the bike carrier and therefore having the elongated member connected to the base member the elongated member may be connected to the point on the bike carrier will be easiest for a user to reach if the bike carrier is mounted on the roof of the vehicle.

According to at least one example embodiment of the invention the connection of the elongated member to said base member secures the distance between the first and the second configuration. The elongated member may be connected to the base member such that the minimal distance between the first and the second configuration is kept during transportation of a bike. Hence, the elongated member is connected to the base member such that the bike may be secured by the second shank of the hook in the space defined by the first and the second portion and the second shank.

### Brief description of the drawings

The above objects, as well as additional objects, features and advantages of the present invention, will be more fully appreciated by reference to the following illustrative and non-limiting detailed description of embodiments of the present invention, when taken in conjunction with the accompanying drawings, wherein:
Fig. 1 shows a semi-exploded, schematic view of a bike retaining device in accordance with at least one embodiment of the invention;
Fig. 2 shows a schematic view of the bike retaining device of Fig. 1 wherein the hook is in a first configuration;
Fig. 3 shows a schematic view of the bike retaining device of Figs. 1-2 wherein the hook is in a second configuration;
Fig. 4 shows a schematic view of the bike retaining device of Figs. 1-3 wherein the hook is in a position in between the first and the second configuration;
Fig. 5 shows a schematic view of a bike carrier comprising the bike retaining device of Figs. 1-4 in accordance with at least one embodiment of the invention;
Fig. 6 shows a schematic view of the bike carrier of Fig. 5 when in use and wherein the hook is in a first configuration;
Fig. 7 shows a schematic view of the bike carrier of Fig. 5-6 when in use and wherein the hook is in a second configuration.

### Detailed description of the drawings

In the present detailed description, embodiments of the present invention will be discussed with the accompanying figures. It should be noted that this by no means limits the scope of the invention, which is also applicable in other circumstances for instance with other types or variants of bike retaining devices and bike carriers than the embodiments shown in the appended drawings. Further, that specific features are mentioned in connection to an embodiment of the invention does not mean that those components cannot be used to an advantage together with other embodiments of the invention.

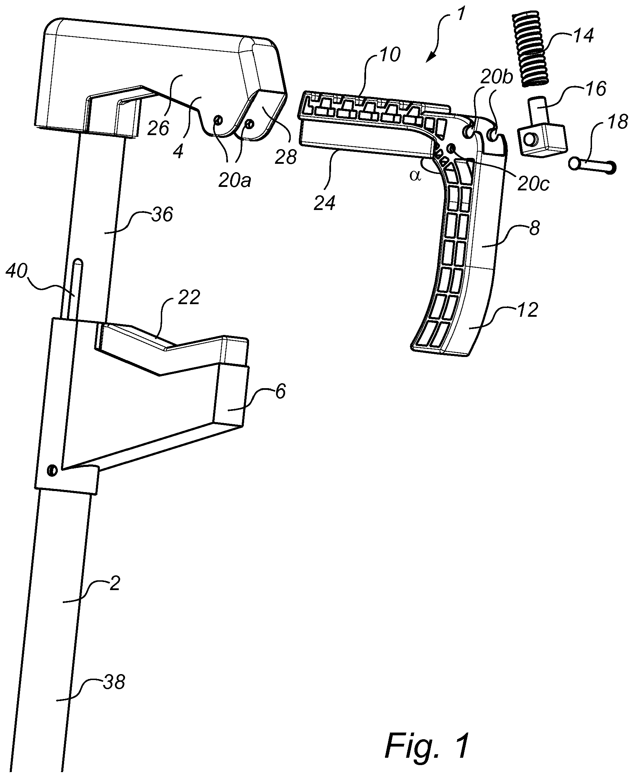

Fig. 1 shows an exploded view of a bike retaining device 1. The bike retaining device 1 comprises an elongated arm 2 having a longitudinal extension, a first portion 4 and a second portion 6. The first portion comprises connection holes 20a and a front side 26 and a back side 28. The second portion 6 comprises a bike resting surface 22. Moreover, the bike retaining device 1 comprises a hook 8, which comprises a first 10 and a second shank 12 and first connection holes 20b and a second connection hole 20c. The first shank 10 comprises a bike receiving surface 24. The bike retaining device 1 of Fig. 1 further comprises a spring 14 and a first 16 and second connection means 18. The elongated arm comprises a first 36 and a second part 38. Further, the first part 36 of the elongated arm 2 comprises a track 40.

The first 4 and second portions 6 are arranged such that they project laterally away from the elongated arm 2. The first 10 and second shank 12 are arranged at an angle α to each other. Here, the angle between the main extension of the first 10 and the second shank 12 is substantially 90 degrees, hence the first 10 and the second shank 12 is arranged perpendicular to each other.

The bike resting surface 22 is a non-planar surface, it may be substantially cup-shaped. Here, it is v-shaped. The non-planar shape of the bike resting surface 22 hinders the bike to move away from the bike resting surface 22 when the bike retaining device 1 is in use. The bike resting surface 22 is arranged such that it is facing the first portion.

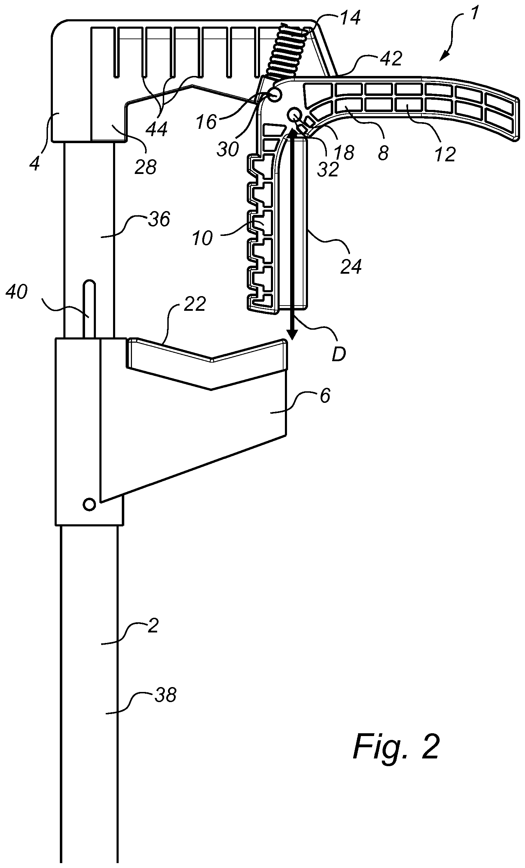

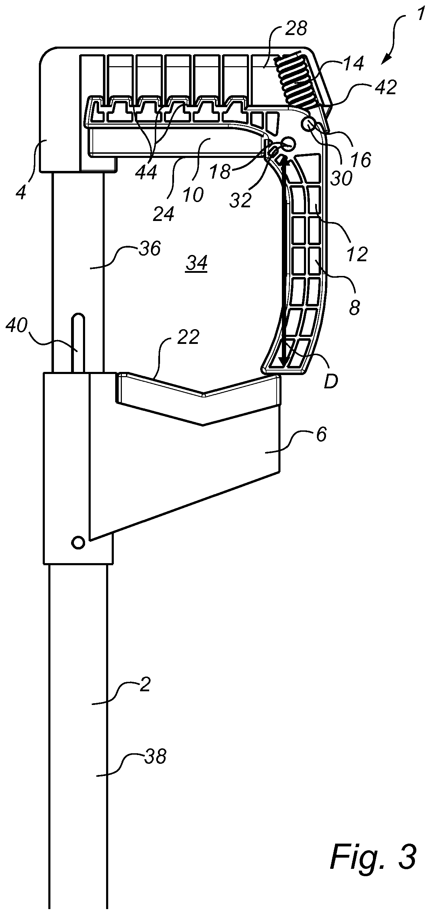

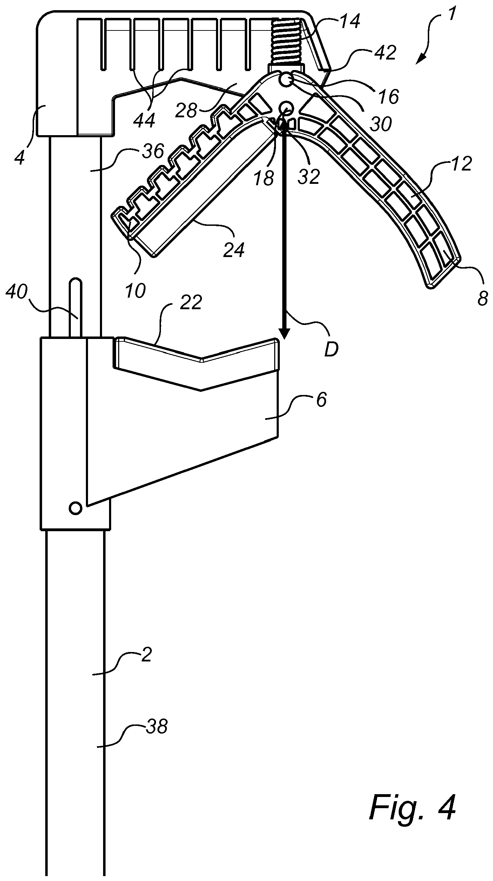

Now turning to Figs. 2-4, which figures shows the bike retaining device 1 in Fig. 1. These figures show the hook 8 of bike retaining device 1 is in a first (Fig. 2) and a second configuration (Fig. 3) or in between the first and the second configuration (Fig. 4). The front side 26 of the first portion 4 is not shown in these figures to facilitate the description and to clearer visualize how the hook 8 is connected to said first portion 4. The hook 8 is arranged in between the front side 26 and the back side 28 of the first portion 4. Moreover, the hook 8 is arranged such that the connection hole 20c of the hook 8 and the connection holes 20a of the first portion 4 is aligned. It can be seen in Figs. 2-4 here that the backside 28 further comprises an edge 42 arranged at the distal end of the first portion 4 and stops 44. The edge 42 is arranged such that the hook is kept under spring load in its first configuration. The stops 44 are arranged such that the hook is kept under spring load when it is in its second configuration.

The length of the elongated arm 2 may be varied such that the distance between the first 4 and second portions 6 is altered. For instance, the distance between the first 4 and the second portion 6 shall preferably be a minimal distance during transportation of a bike. Further, the distance shall preferably be a maximal distance during loading of a bike in said bike retaining device 1. The first part 36 is arranged inside the second part 38 of the elongated arm 2. Here, the length of the elongated arm 2 can be altered between a maximal and a minimal distance by moving the first part 36 relative the second part 38 along track 40. The first part 36 may move inside the second part 38, i.e. the first part 36 is telescopically moveable relative the second part 38. The ends of the track 40 defines the maximal and minimal distance between the first 4 and second portions 6. Not visible in the figure there is a protruding part inside the second part 38 of the elongated arm 2 which moves inside the track 40.

The hook 8 is connected to the first portion 4 via a first 30 and a second attachment point 32. The first attachment point 30 is where the first connection means 16 is attached to the hook 8. The first connection means 16 is further connected to the spring 14 which is attached to the first portion 4 of the bike retaining device. The first connection means 16 is attached to the hook 8 via the first connection hole 20b. The second attachment point 32 is where the second connection means 18 is attached to the hook 8. The second connection means 18 goes through the connection holes 20a of the first portion 4 as well as the second connection hole 20c of the hook 8. The second attachment point 32 is a pivot point for the hook 8 which enables the movement of the hook 8 from its first configuration to its second configuration. The first and the second attachment points 30, 32 are spaced apart on the hook 8. Fig. 2 show the bike retaining device 1 when the hook is arranged in the first configuration. When in the first configuration, the first shank 10 is arranged such that the distance D between the first 4 and the second portion 6 is partially covered. The first shank 10 is parallel to the longitudinal direction of the elongated arm 2. The second shank 12 is here substantially parallel to a projecting direction of the first 4 and second portion 6. Moreover, the bike receiving surface 24 of the first shank 10 is arranged such that it allows a user of said bike retaining device 1 to put a frame portion of a bike adjacent to the bike receiving surface 24 and further allows the user to press a frame portion of the bike against said bike receiving surface 24 of the first shank 10. When the user presses the frame portion towards the bike receiving surface 24 the hook 8 will move from the first configuration towards the second configuration.

In this first configuration the hook 8 is under spring load. The spring 14 "strives" towards its normal state, i.e. towards the elongated arm 2, which may cause a movement of the hook such that the second shank 12 moves upwards as depicted in the figure. The edge 42 is arranged on the first portion such that there are no possibilities for this movement and the spring is kept compressed. The spring 14 applies a force on the hook 8 in a direction towards the elongated arm 2. In order to move the hook in the other direction, i.e. towards the second configuration, a force is required since the spring 14 needs to be more compressed. This force may be applied by pressing the frame portion of the bike against the bike receiving surface 24, i.e. against the first shank 10.

Fig. 3 shows the bike retaining device 1 when the hook 8 is arranged in the second configuration. When in said second configuration the second shank 12 is arranged such that the distance between said first 4 and second portion 6 is at least partially covered. Here, the length of the elongated arm 2 is set so that the distance between the first 4 and second portions 6 is minimal. The length of the second shank 12 equals this minimal distance between the first 4 and second portion 6 and hence the distance is fully covered by the second shank 12. When the hook 8 is arranged in the second configuration a space 34 is defined by the first portion 4, the second portion 6 and the second shank 12 for securing a frame portion of a bike.

In this second configuration the hook 8 is under spring load. The spring 14 "strives" towards its normal state, i.e. away from the elongated arm 2, which may cause a movement of the hook such that the first shank 10 moves upwards as depicted in the figure. The stops 44 are arranged on the first portion such that there are no possibilities for this movement and the spring is kept compressed. The spring 14 applies a force on the hook 8 in a direction away from the elongated arm 2. In order to move the hook in the other direction, i.e. towards the first configuration, a force is required since the spring 14 needs to be more compressed. This force may be applied by pressing the frame portion of the bike against the second shank 12, and thereby compress the spring. Please note the direction of the longitudinal extension of the spring 14 is different when the hook is arranged in the first configuration as depicted in Fig. 2 compared to when the hook is arranged in the second configuration as depicted in Fig. 3.

Fig. 4 shows the bike retaining device 1 when the hook 8 is in arranged between the first and the second configuration. When in between the first and second configuration, the hook 8 is not under spring load and the spring is here in a more compressed state as compared with when the hook 8 is arranged in its first or second configuration. The spring will "strive" to a more elongated state, i.e. its normal state, and hence there is a minimal force needed to move to either the first or the second configuration. Here, the hook 8 is in the middle between the first and the second configuration and the longitudinal extension of the spring 14 is parallel to the elongated arm 2. The spring 14 applies a downwardly directed force on the hook 8 and a movement of the hook 8 in that direction is hindered by the second connection means 18.

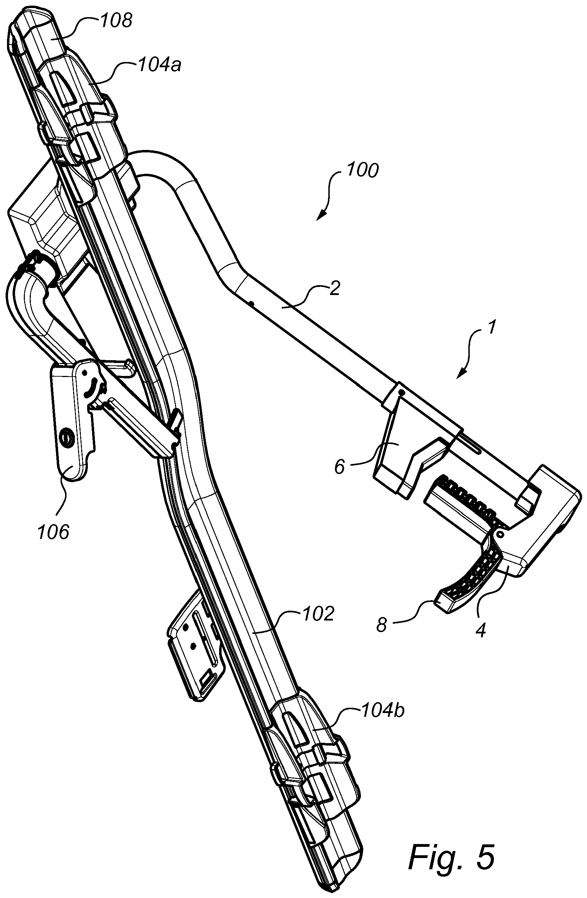

Fig. 5 shows a bike carrier 100 comprising the bike retaining device 1, which has previously been shown in Figs. 1-4 above. Moreover, the bike carrier comprises a base member 102. The base member 102 comprises two wheel holders 104a and 104b which are spaced apart on the base member 102 as well as a tensioning mechanism 106. In Fig 5, the hook 8 of the bike retaining device is arranged in the first configuration. The bike retaining device 1 is connected to the base member 102 close to a front end 108 of the bike carrier 100. The tensioning mechanism 106 is connected to an elongated member (not shown in the figure). The elongated member is arranged for moving the first portion 4 relative the second portion 6. The tension mechanism 106 is arranged to pull the elongated member, which in turn pulls the first portion 4, such that the distance between the first 4 and the second portion 6 is decreased. When the tensioning mechanism 106 is in a locked configuration there are no possibilities for any movement of the first portion 4 relative the second portion 6 in the longitudinal extension of the elongated arm.

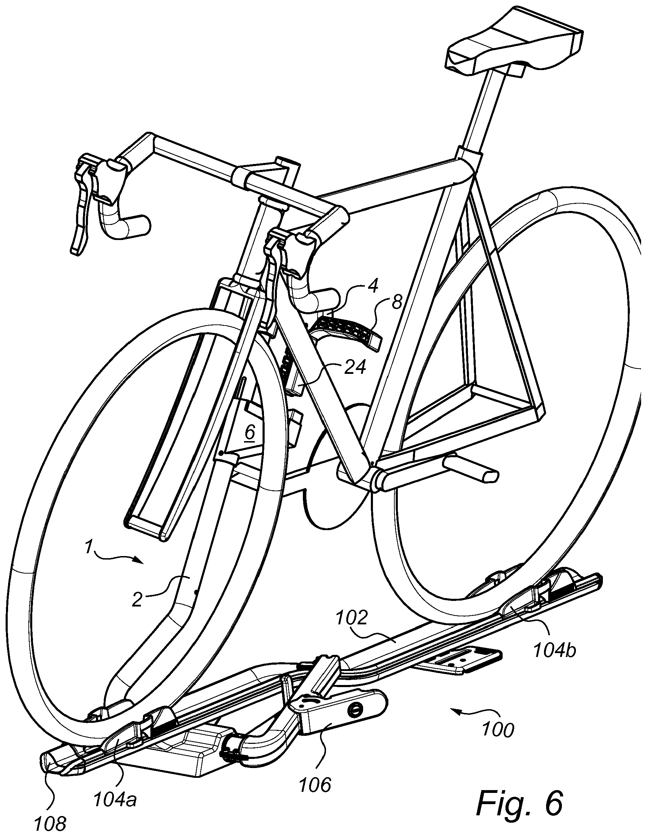

Fig. 6-7 show the bike carrier 100 when in use. In Fig. 6 the wheels of the bike have been placed in the wheel holders 104a,b. The hook 8 of the bike retaining device 1 is arranged in the first configuration. A frame portion of the bike is placed adjacent to the bike receiving surface 24, the frame portion may be pressed against the bike receiving surface 24 in order to move the hook 8 from the first configuration to the second configuration.

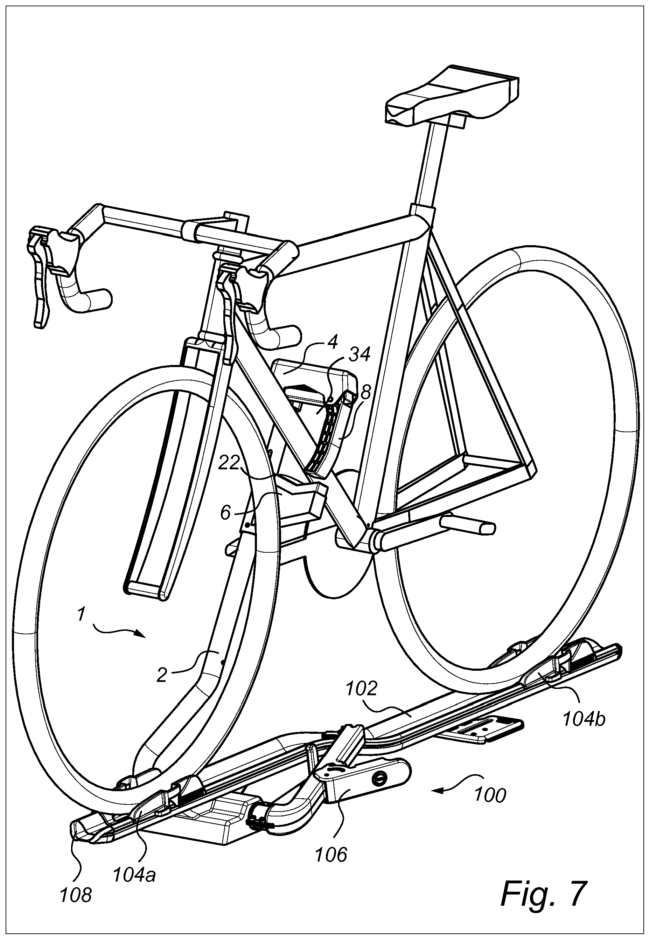

In Fig. 7 the hook 8 of the bike retaining device 1 is arranged in the second configuration. The frame portion of the bike is here secured in the space 34 defined by the first 4 and second portion 6 and the second shank 12. The frame portion rest on the bike resting surface 22 of the second portion 6.

The skilled person realizes that a number of modifications of the embodiments described herein are possible without departing from the scope of the invention, which is defined in the appended claims. For instance, the angle between the first and the second shanks may be less than 90 degrees. Furthermore, the length of the different parts of the bike retaining device may be of different length suitable for different types and sizes of the bike which may be secured in the bike retaining device.

## Claims

1. A bike retaining device (1) for retaining a bike in a bike carrier arrangement on a vehicle, said bike retaining device (1) comprising:
- an elongated arm (2) having a longitudinal extension;
- a first portion (4) and a second portion (6) projecting laterally away from said elongated (2) arm;
wherein said first portion (4) and said second portion (6) are arranged at a distance from each other
wherein said first portion (4) is movable relative to the second portion (6) in the direction of the longitudinal extension of the elongated arm (2);
- a hook (8) connected to said first portion (4), said hook (8) comprising
a first shank (10) and a second shank (12);
wherein said hook (8) is arrangeable at least in a first configuration and a second configuration;
wherein in said first configuration said first shank (10) is arranged such that a distance between said first portion (4) and said second portion (6) is at least partially covered by the first shank (10) and such that it allows a user of said bike retaining device (1) to press a frame portion of said bike against said first shank (10);
wherein said hook (8) is movable from said first configuration to said second configuration when said user of said bike retaining device (1) presses a frame portion of said bike against said first shank (10); and
wherein in said second configuration said second shank (12) is arranged such that the distance between said first (4) and second portion (6) is at least partially covered by said second shank (12), whereby a space is defined by said first portion (4), said second portion (6) and said second shank (12) for securing said frame portion of said bike.

2. The bike retaining device (1) according to claim 1, wherein said first shank (10) and said second shank (12) are arranged at an angle, preferably perpendicular, to each other.

3. The bike retaining device (1) according to any one of the preceding claims, wherein said hook (8) is pivotably attached to said first portion (4) such that said first and second shank (10, 12) pivot simultaneously around a pivot point.

4. The bike retaining (1) device according to any one of the preceding claims, wherein said hook (8) is attached to said first portion (4) at a distal end of said first portion (4).

5. The bike retaining device (1) according to any one of the preceding claims, wherein in said first configuration said first shank (10) is substantially parallel to said longitudinal extension of said elongated arm (2) and said second shank (12) is substantially parallel to a projecting direction of said first and second portions (4, 6); and
wherein in said second configuration said first shank (10) is substantially parallel to said projecting direction of said first and second portions (4, 6) and said second shank (12) is substantially parallel to said longitudinal extension of said elongated arm (2).

6. The bike retaining device (1) according to any one preceding of claims, wherein said hook (8) is connected to said first portion (4) via a spring (14) and wherein said hook (8) is under spring load in at least one of said first configuration or said second configuration.

7. The bike retaining device (1) according to claim 6 when dependent on claim 3, wherein said hook (8) comprises a first and a second attachment point (30, 32);
wherein said first attachment point (30) is said pivot point and said spring (14) is connected to said hook (8) at said second attachment point (32);
and wherein said first and said second attachment points (30, 32) are spaced apart on said hook (8).

8. The bike retaining device (1) according to any one of claims 6-7, wherein said spring (14) is compressed when pivoting said hook (8) from said first configuration to said second configuration.

9. The bike retaining device (1) according to any one of the preceding claims, wherein said second shank (12) of the hook (8) substantially covers said full distance between said first portion (4) and said second portion (6) in said second configuration at least when said distance between said first portion (4) and said second portion (6) is equal to a minimal distance between said first portion (4) and said second portion (6).

10. The bike retaining device (1) according to any one of the preceding claims wherein said elongated arm (2) comprises a first and a second part (36, 38), wherein said first part (36) is movable in the longitudinal extension of said elongated arm (2) relative said second part (38); and
wherein said first portion (4) is arranged on said first part (36) of the elongated arm (2) and the second portion (6) is arranged on said second part (38) of the elongated arm (2).

11. A bike retaining device (1) according to any one of the preceding claims, wherein said bike retaining device (1) further comprises an elongated member arranged inside or along said elongated arm (2) and wherein said elongated member is arranged for moving said first portion (4) relative said second portion (6).

12. A bike carrier (100) comprising a bike retaining device (1) according to any one of the preceding claims and a base member (102);
wherein said bike retaining device (1) is attached to said base member (102).

13. The bike carrier arrangement according to claim 12, wherein said base member (102) comprises a first and a second wheel holder (104a, 104b) arranged separated from each other on said base member (102).

14. The bike carrier arrangement according to any one of claims 12-13, wherein said elongated member comprises a first and a second end, wherein said first end is connected to said first portion (4) of said bike retaining device (1) and wherein said second end is connected to said base member (102).

## Patentansprüche

1. Fahrradhaltevorrichtung (1) zum Halten eines Fahrrads in einer Fahrradträgeranordnung auf einem Fahrzeug, wobei die Fahrradhaltevorrichtung (1) Folgendes umfasst:
- einen länglichen Arm (2) mit einer Längserstreckung;
- einen ersten Abschnitt (4) und einen zweiten Abschnitt (6), die seitlich weg von dem länglichen (2) Arm vorstehen;
wobei der erste Abschnitt (4) und der zweite Abschnitt (6) in einem Abstand voneinander angeordnet sind,
wobei der erste Abschnitt (4) relativ zu dem zweiten Abschnitt (6) in die Richtung der Längserstreckung des länglichen Arms (2) bewegbar ist;
- einen Haken (8), der mit dem ersten Abschnitt (4) verbunden ist, wobei der Haken (8) einen ersten Schaft (10) und einen zweiten Schaft (12) umfasst;
wobei der Haken (8) mindestens in einer ersten Konfiguration und einer zweiten Konfiguration anordbar ist;
wobei der erste Schaft (10) in der ersten Konfiguration derart angeordnet ist, dass ein Abstand zwischen dem ersten Abschnitt (4) und dem zweiten Abschnitt (6) zumindest teilweise von dem ersten Schaft (10) abgedeckt ist, und derart, dass er es einem Benutzer der Fahrradhaltevorrichtung (1) ermöglicht, einen Rahmenabschnitt des Fahrrads gegen den ersten Schaft (10) zu drücken;
wobei der Haken (8) von der ersten Konfiguration zu der zweiten Konfiguration bewegbar ist, wenn der Benutzer der Fahrradhaltevorrichtung (1) einen Rahmenabschnitt des Fahrrads gegen den ersten Schaft (10) drückt; und
wobei der zweite Schaft (12) in der zweiten Konfiguration derart angeordnet ist, dass der Abstand zwischen dem ersten (4) und zweiten Abschnitt (6) zumindest teilweise von dem zweiten Schaft (12) abgedeckt ist, wodurch ein Raum durch den ersten Abschnitt (4), den zweiten Abschnitt (6) und den zweiten Schaft (12) zum Sichern des Rahmenabschnitts des Fahrrads definiert ist.

2. Fahrradhaltevorrichtung (1) nach Anspruch 1, wobei der erste Schaft (10) und der zweite Schaft (12) in einem Winkel, vorzugsweise senkrecht, zueinander angeordnet sind.

3. Fahrradhaltevorrichtung (1) nach einem der vorhergehenden Ansprüche, wobei der Haken (8) an dem ersten Abschnitt (4) derart schwenkbar angebracht ist, dass der erste und zweite Schaft (10, 12) gleichzeitig um einen Schwenkpunkt schwenken.

4. Fahrradhaltevorrichtung (1) nach einem der vorhergehenden Ansprüche, wobei der Haken (8) an dem ersten Abschnitt (4) an einem distalen Ende des ersten Abschnitts (4) angebracht ist.

5. Fahrradhaltevorrichtung (1) nach einem der vorhergehenden Ansprüche, wobei der erste Schaft (10) in der ersten Konfiguration im Wesentlichen parallel zu der Längserstreckung des länglichen Arms (2) ist und der zweite Schaft (12) im Wesentlichen parallel zu einer Vorstehungsrichtung des ersten und zweiten Abschnitts (4, 6) ist; und wobei der erste Schaft (10) in der zweiten Konfiguration im Wesentlichen parallel zu der Vorstehungsrichtung des ersten und zweiten Abschnitts (4, 6) ist und der zweite Schaft (12) im Wesentlichen parallel zu der Längserstreckung des länglichen Arms (2) ist.

6. Fahrradhaltevorrichtung (1) nach einem der vorhergehenden Ansprüche, wobei der Haken (8) mit dem ersten Abschnitt (4) über eine Feder (14) verbunden ist und wobei der Haken (8) in mindestens einer von der ersten Konfiguration oder der zweiten Konfiguration unter Federbelastung ist.

7. Fahrradhaltevorrichtung (1) nach Anspruch 6, wenn abhängig von Anspruch 3, wobei der Haken (8) einen ersten und einen zweiten Anbringungspunkt (30, 32) umfasst;
wobei der erste Anbringungspunkt (30) der Schwenkpunkt ist und die Feder (14) mit dem Haken (8) an dem zweiten Anbringungspunkt (32) verbunden ist;
und wobei der erste und der zweite Anbringungspunkt (30, 32) auf dem Haken (8) voneinander beabstandet sind.

8. Fahrradhaltevorrichtung (1) nach einem der Ansprüche 6-7, wobei die Feder (14) komprimiert wird, wenn der Haken (8) von der ersten Konfiguration zu der zweiten Konfiguration geschwenkt wird.

9. Fahrradhaltevorrichtung (1) nach einem der vorhergehenden Ansprüche, wobei der zweite Schaft (12) des Hakens (8) den gesamten Abstand zwischen dem ersten Abschnitt (4) und dem zweiten Abschnitt (6) in der zweiten Konfiguration zumindest dann im Wesentlichen abdeckt, wenn der Abstand zwischen dem ersten Abschnitt (4) und der zweiten Abschnitt (6) gleich einem Mindestabstand zwischen dem ersten Abschnitt (4) und dem zweiten Abschnitt (6) ist.

10. Fahrradhaltevorrichtung (1) nach einem der vorhergehenden Ansprüche, wobei der längliche Arm (2) ein erstes und ein zweites Teil (36, 38) umfasst, wobei das erste Teil (36) in der Längserstreckung des länglichen Arms (2) relativ zu dem zweiten Teil (38) bewegbar ist; und
wobei der erste Abschnitt (4) auf dem ersten Teil (36) des länglichen Arms (2) angeordnet ist und der zweite Abschnitt (6) auf dem zweiten Teil (38) des länglichen Arms (2) angeordnet ist.

11. Fahrradhaltevorrichtung (1) nach einem der vorhergehenden Ansprüche, wobei die Fahrradhaltevorrichtung (1) ferner ein längliches Element umfasst, das im Inneren oder entlang des länglichen Arms (2) angeordnet ist, und wobei das längliche Element zum Bewegen des ersten Abschnitts (4) relativ zu dem zweiten Abschnitt (6) angeordnet ist.

12. Fahrradträger (100), umfassend eine Fahrradhaltevorrichtung (1) nach einem der vorhergehenden Ansprüche und ein Basiselement (102);
wobei die Fahrradhaltevorrichtung (1) an dem Basiselement (102) angebracht ist.

13. Fahrradträgeranordnung nach Anspruch 12, wobei das Basiselement (102) einen ersten und einen zweiten Radhalter (104a, 104b) umfasst, die getrennt voneinander auf dem Basiselement (102) angeordnet sind.

14. Fahrradträgeranordnung nach einem der Ansprüche 12-13, wobei das längliche Element ein erstes und ein zweites Ende umfasst, wobei das erste Ende mit dem ersten Abschnitt (4) der Fahrradhaltevorrichtung (1) verbunden ist und wobei das zweite Ende mit dem Basiselement (102) verbunden ist.

## Revendications

1. Dispositif de maintien d'une bicyclette (1) pour maintenir une bicyclette dans un système de support de bicyclette sur un véhicule, ledit dispositif de maintien d'une bicyclette (1) comprenant :
- un bras allongé (2) ayant une extension longitudinale,
- une première partie (4) et une deuxième partie (6) en projection latérale dudit bras allongé (2),
ladite première partie (4) et ladite deuxième partie (6) étant disposées à distance l'une de l'autre,
ladite première partie (4) étant mobile par rapport à la deuxième partie (6) dans la direction de l'extension longitudinale du bras allongé (2),
- un crochet (8) raccordé à ladite première partie (4), ledit crochet (8) comprenant une première branche (10) et une deuxième branche (12),
ledit crochet (8) pouvant être agencé au moins dans une première configuration et une deuxième configuration,
dans ladite première configuration, ladite première branche (10) étant agencée de telle manière qu'une distance entre ladite première partie (4) et ladite deuxième partie (6) est au moins en partie couverte par la première branche (10) et de telle sorte que cela permet à un utilisateur dudit dispositif de maintien de bicyclette (1) d'appuyer sur une partie du cadre de ladite bicyclette contre ladite première branche (10),
ledit crochet (8) étant mobile de ladite première configuration à ladite deuxième configuration lorsque ledit utilisateur dudit dispositif de maintien de bicyclette (1) appuie sur une partie du cadre de ladite bicyclette contre ladite première branche (10), et
dans ladite deuxième configuration, ladite deuxième branche (12) étant agencée de telle manière que la distance entre ladite première (4) et deuxième partie (6) est au moins en partie couverte par ladite deuxième branche (12), un espace étant de ce fait défini par ladite première partie (4), ladite deuxième partie (6) et ladite deuxième branche (12) pour sécuriser ladite partie de cadre de ladite bicyclette.

2. Dispositif de maintien d'une bicyclette (1) selon la revendication 1, ladite première branche (10) et ladite deuxième branche (12) étant agencées à un angle, de préférence perpendiculaires l'une à l'autre

3. Dispositif de maintien d'une bicyclette (1) selon l'une quelconque des revendications précédentes, ledit crochet (8) étant fixé en pivotement à ladite première partie (4) de telle manière que ladite première et deuxième branche (10, 12) pivotent simultanément autour d'un point de pivotement.

4. Dispositif de maintien d'une bicyclette (1) selon l'une quelconque des revendications précédentes, ledit crochet (8) étant fixé à ladite première partie (4) à une extrémité distale de ladite première partie (4).

5. Dispositif de maintien d'une bicyclette (1) selon l'une quelconque des revendications précédentes, dans ladite première configuration, ladite première branche (10) étant pour l'essentiel parallèle à ladite extension longitudinale dudit bras allongé (2) et ladite deuxième branche (12) étant pour l'essentiel parallèle à une direction de projection desdites première et deuxième parties (4, 6), et
dans une deuxième configuration, ladite première branche (10) étant pour l'essentiel parallèle à ladite direction de projection desdites première et deuxième parties (4, 6) et ladite deuxième branche (12) étant pour l'essentiel parallèle à ladite extension longitudinale dudit bras allongé (2).

6. Dispositif de maintien d'une bicyclette (1) selon l'une quelconque des revendications précédentes, ledit crochet (8) étant raccordé à ladite première partie (4) par l'intermédiaire d'un ressort (14) et ledit crochet (8) étant sous charge de ressort dans au moins une de ladite première configuration ou de ladite deuxième configuration.

7. Dispositif de maintien d'une bicyclette (1) selon la revendication 6 dépendant de la revendication 3, ledit crochet (8) comprenant un premier et un deuxième point de fixation (30, 32),
ledit premier point de fixation (30) étant ledit point de pivotement et ledit ressort (14) étant raccordé audit crochet (8) audit deuxième point de fixation (32),
et lesdits premier et deuxième points de fixation (30, 32) étant espacés sur ledit crochet (8).

8. Dispositif de maintien d'une bicyclette (1) selon l'une quelconque des revendications 6-7, ledit ressort (14) étant comprimé en faisant pivoter ledit crochet (8) de ladite première configuration à ladite deuxième configuration.

9. Dispositif de maintien d'une bicyclette (1) selon l'une quelconque des revendications précédentes, ladite deuxième branche (12) du crochet (8) couvrant pour l'essentiel ladite distance complète entre ladite première partie (4) et ladite deuxième partie (6) dans ladite deuxième configuration au moins lorsque ladite distance entre ladite première partie (4) et ladite deuxième partie (6) est égale à une distance minimale entre ladite première partie (4) et ladite deuxième partie (6).

10. Dispositif de maintien d'une bicyclette (1) selon l'une quelconque des revendications précédentes, ledit bras allongé (2) comprenant une première et deuxième pièce (36, 38) ladite première pièce (36) étant mobile dans l'extension longitudinale dudit bras allongé (2) par rapport à ladite deuxième pièce (38), et
ladite première partie (4) étant disposée sur ladite première pièce (36) du bras allongé (2) et la deuxième partie (6) étant disposée sur ladite deuxième pièce (38) du bras allongé (2).

11. Dispositif de maintien d'une bicyclette (1) selon l'une quelconque des revendications précédentes, ledit dispositif de maintien de bicyclette (1) comprenant en plus un élément allongé disposé à l'intérieur ou le long dudit bras allongé (2) et ledit élément allongé étant disposé pour déplacer ladite première partie (4) par rapport à ladite deuxième partie (6).

12. Porte-bicyclette (100) comprenant un dispositif de maintien de bicyclette (1) selon l'une quelconque des revendications précédentes et un élément de base (102),
ledit dispositif de maintien de bicyclette (1) étant fixé audit élément de base (102).

13. Dispositif porte-bicyclette selon la revendication 12, ledit élément de base (102) comprenant un premier et un deuxième support de roue (104a, 104b) disposé séparé l'un de l'autre sur ledit élément de base (102).

14. Dispositif porte-bicyclette selon l'une quelconque des revendications 12-13, ledit élément allongé comprenant une première et une deuxième extrémité, ladite première extrémité étant raccordée à ladite première partie (4) dudit dispositif de maintien de bicyclette (1) et ladite deuxième extrémité étant raccordée audit élément de base (102).
